# EUROPEAN PATENT SPECIFICATION

(11) **EP 3 019 538 B1**
(45) Date of publication and mention of the grant of the patent: **18.04.2018**
(21) Application number: 14741760.4
(22) Date of filing: 01.07.2014
(51) Int. Cl.: C08F 216/00, C08F 220/10, C08F 224/00, C08F 226/00, C08F 230/00, C09J 4/00, C08F 230/06

(54) **BONDING COMPOSITION AND COMPONENT THEREOF, AND METHOD OF USING THE SAME**
BINDUNGSZUSAMMENSETZUNG UND KOMPONENTE DAVON SOWIE VERFAHREN ZUR VERWENDUNG DAVON
COMPOSITION DE LIAISON ET SES COMPOSANTS, ET PROCÉDÉ D'UTILISATION

(30) Priority: 12.07.2013 US 201361845768 P
(43) Date of publication of application: 18.05.2016
(73) Proprietor: 3M Innovative Properties Company, St. Paul, MN 55133-3427 (US)
(72) Inventor: KARP, Gregory P., Saint Paul, Minnesota 55133-3427 (US); KROPP, Michael A., Saint Paul, Minnesota 55133-3427 (US)
(74) Representative: Herzog, Fiesser & Partner Patentanwälte PartG mbB
(86) International application number: PCT/US2014/045015
(87) International publication number: WO 2015/006094

(56) References cited:
- JP-A- S57 155 208
- US-A- 4 647 504
- US-A- 5 935 711
- US-A1- 2005 004 332
- US-A1- 2006 266 476
- US-B1- 6 479 602

## Description

### TECHNICAL FIELD

The present disclosure broadly relates to bonding compositions, and more specifically to two-part acrylic bonding compositions.

### BACKGROUND

Various methods for adhesively bonding low surface energy substrates such as polyethylene, polypropylene and polytetrafluoroethylene have been developed. One approach involves the use of acrylic bonding compositions that include acrylic monomer, a borane-amine complex, and a compound that decomplexes the amine from the borane, which then initiates polymerization of the acrylic monomer.

Due to their unstable nature, such acrylic bonding compositions are typically supplied as two-part systems that are to be mixed immediately prior to use. The two-parts consist of a part A composition (often called Part A composition) that contains an amine-borane complex in a reactive diluent, and a second part (often called Part B) that contains a polymerizable monomers and polymer. Various reactive diluents have been described that can be added to bonding compositions, including 1,4-dioxo-2-butene-functional compounds as reported in U.S Pat No. 6,252,023 (Moren) and aziridine-functional compounds as reported in U.S. Pat. No. 5.935,711 (Pocius et. al.). Vinyl aromatic compounds of the type reported in PCT Publication WO 01/68783 (Moren) have also been disclosed. These reactive diluents all have shortcomings, including instability in the presence of the borane and/or toxicity.

There is a continuing need for alternative reactive diluents that do not prematurely cause curing of the Part A composition, or adversely affect curing of the adhesive when Part A composition and Part B are mixed.

### SUMMARY

In a first aspect, the present disclosure provides a two-part bonding composition comprising:
a part A composition comprising an organoborane-base complex and at least one reactive diluent, wherein the at least one reactive diluent comprises at least one of:
   i) triallyl isocyanurate;
   ii) triallyl cyanurate;
   iii) at least one N-allylamide represented by the formula 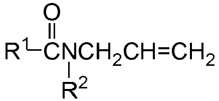 wherein
      R¹ and R² independently represent alkyl groups having from 1 to 7 carbon atoms, optionally interrupted up to 3 times by oxygen, and optionally substituted up to 2 times with hydroxyl groups, or taken together R¹ and R² represent -(CH₂)₃-, -(CH₂)₄-, or -(CH₂)₅-; or
   iv) at least one allyl ether represented by the formula 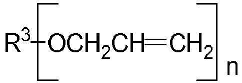 wherein
      R³ represents an n-valent hydrocarbonaceous group having from 1 to 24 carbon atoms, optionally interrupted up to 8 times by oxygen, and optionally substituted up to 6 times with hydroxyl groups, and
      n represents 1, 2, 3, 4, 5, or 6;
a part B composition comprising at least one free-radically polymerizable monomer and at least one compound capable of decomplexing the organoborane-base complex.

In another aspect, the present disclosure provides a method of making a bonding composition, the method comprising combining:
a part A composition comprising an organoborane-base complex and at least one reactive diluent, wherein the at least one reactive diluent comprises at least one of:
   i) triallyl isocyanurate;
   ii) triallyl cyanurate;
   iii) at least one N-allylamide represented by the formula 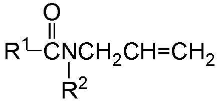 wherein
      R¹ and R² independently represent alkyl groups having from 1 to 7 carbon atoms, optionally interrupted up to 3 times by oxygen, and optionally substituted up to 2 times with hydroxyl groups, or taken together R¹ and R² represent -(CH₂)₃-, -(CH₂)₄-, or -(CH₂)₅-; or
   iv) at least one allyl ether represented by the formula 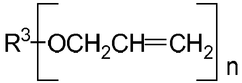 wherein
      R³ represents an n-valent hydrocarbonaceous group having from 1 to 24 carbon atoms, optionally interrupted up to 8 times by oxygen, and optionally substituted up to 6 times with hydroxyl groups, and
      n represents 1, 2, 3, 4, 5, or 6; and
a part B composition comprising at least one free-radically polymerizable monomer and at least one compound capable of decomplexing the organoborane-base complex.

In yet another aspect, the present disclosure provides a part A composition for use in a two-part bonding composition, wherein the part A composition comprises an organoborane-base complex and at least one reactive diluent, wherein the at least one reactive diluent is selected from the group consisting of:
i) triallyl isocyanurate;
ii) triallyl cyanurate;
iii) at least one N-allylamide represented by the formula 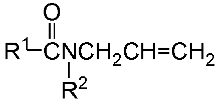 wherein
   R¹ and R² independently represent alkyl groups having from 1 to 7 carbon atoms, optionally interrupted up to 3 times by oxygen, and optionally substituted up to 2 times with hydroxyl groups, or taken together R¹ and R² represent --(CH₂)₃-, -(CH₂)₄-, or -(CH₂)₅-; or
iv) at least one allyl ether represented by the formula 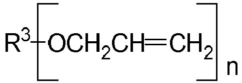 wherein
   R³ represents an n-valent hydrocarbonaceous group having from 1 to 24 carbon atoms, optionally interrupted up to 8 times by oxygen, and optionally substituted up to 6 times with hydroxyl groups, and
   n represents 1, 2, 3, 4, 5, or 6; and
v) combinations thereof.

Advantageously, bonding compositions and components according to the present disclosure are readily available, relatively inexpensive, and suitable for use in stable two-part bonding compositions (and part A compositions for use in two-part bonding compositions) without substantial affect on curing behavior.

As used herein:

The term "essentially free of" means containing less than 0.5 percent by weight of (e.g., less than 0.1 percent of, or free of).

The term "acid anhydride" refers to an organic compound that has two acyl groups bound to the same oxygen atom.

The term "hydrocarbonaceous" means composed of carbon and hydrogen atoms.

The phrase "optionally interrupted by oxygen" in reference to an alkyl group means that an oxygen atom is inserted between adjacent carbon atoms in the alkyl group. For example, CH₃CH₃ may become CH₃OCH₃.

The phrase "optionally interrupted from one to six times by oxygen" in reference to an alkyl group means optionally interrupted by oxygen at from 1 to 6 different locations in the alkyl group, and does not include interruption by multiple oxygen atoms (e.g., -O-O-) at a single location.

Features and advantages of the present disclosure will be further understood upon consideration of the detailed description as well as the appended claims.

### DETAILED DESCRIPTION

Two-part bonding compositions according to the present disclosure comprise a part A and a part B. Individually, parts A and B have good stability, but when combined stability is lost and curing is initiated.

The part A composition comprises an organoborane-base complex and at least one reactive diluent.

The organoborane-base complex is a latent form of an organoborane which is liberated upon decomplexing the base with an acid or its equivalent. The free organoborane is an initiator capable of initiating free-radical polymerization of polymerizable monomer(s) to form a polymer that can be useful as a bonding composition such as, for example, an acrylic adhesive. The organoborane may be represented by the formula 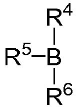 wherein R⁴ is an alkyle group having 1 to about 10 carbon atoms. R⁵ and R⁶ may be the same or different and are independently selected from alkyl groups having 1 to about 10 carbon atoms and aryl groups having 6 to 12 carbon atoms. Preferably, R⁴, R⁵, and R⁶ are independently selected from alkyl groups having 1 to about 5 carbon atoms. Accordingly, R⁴, R⁵, and R⁶ may all be different, or more than one of R⁴, R⁵, and R^{6₃} may be the same. Examples of suitable organoborane initiators include trimethylborane, triethylborane, tri-n-propylborane, triisopropylborane, tri-n-butylborane, triisobutylborane, and tri-sec-butylborane.
The organoborane initiator is complexed with a basic complexing agent (i.e., a base that complexes with the organoborane) to form a stable organoborane-base complex. The organoborane-base complex may be represented by the formula 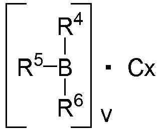 wherein R⁴, R⁵ and R⁶ are as described above, and wherein Cx is a basic complexing agent. Useful basic complexing agents (Cx) include, for example, amines, amidines, hydroxides and/or alkoxides. The ratio of boron atoms to complexing agent (Cx) in the complex is represented by v, and is preferably selected so as to provide an effective ratio of the complexing agent and boron atoms. The boron atom to complexing agent ratio in the complex is preferably from about 1:1 to about 1:2 (e.g., about 1:1). A boron atom to complexing agent ratio of greater than 1:1 could leave free organoborane, a material that tends to be pyrophoric.

Useful basic complexing agents include, for example, 1° and/or 2° amines, hydroxide, alkoxides, and amidines.

Amine complexing agents (Cx) may be provided by a wide variety of materials having a primary or secondary amino group, including blends of different amines. Amine complexing agents may also be polyamines (i.e., materials having two or more amine groups such as two to four amine groups). The polyamines may include 1° and/or 2° amino groups. In one embodiment, the amine complexing agent may be a primary or secondary monoamine represented by the formula 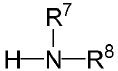 wherein R⁷ and R⁸ are independently selected from the group consisting of hydrogen, and organic groups, preferably alkyle groups having 1 to 10 carbon atoms, alkylaryl groups in which the amine group is not directly attached to the aryl structure, and polyoxyalkylene groups. Alternatively, R⁷ and R⁸ together with the nitrogen atom to which they are attached may be joined to form a 4 to 7-membered heterocyclic ring. Particular examples of these amines include ammonia, ethylamine, butylamine, hexylamine, octylamine, benzylamine, morpholine, piperidine, pyrrolidone, and polyoxyalkylene monoamines (e.g., as marketed under the trade designation JEFFAMINE by Huntsman Corporation, Salt Lake City, Utah). Specific examples include JEFFAMINE M715 and JEFFAMINE M2005 polyoxyalkylene monoamines.

In another embodiment, the amine may be a polyamine such as those represented by the formula 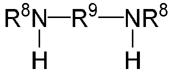 wherein R⁸ is as defined above and wherein R⁹ is a divalent organic group, preferably a divalent alkylene, arylene, or alkylenylarylene group. Preferred among these materials are alkanediamines which may be branched or linear, and having the general structure 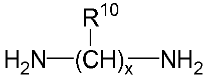 wherein x is a whole number greater than or equal to 1, more preferably about 2 to 12, and each R¹⁰ is independently a hydrogen or an alkyl group. Particularly preferred examples of alkanediamines include 1,2-ethanediamine, 1,3-propanediamine, 1,5-pentanediamine, 1,6-hexanediamine, 1,12-dodecanediamine, 2-methyl-1,5-pentanediamine, and 3-methyl-1,5-pentanediamine. While alkanediamines are preferred, other alkanepolyamines may be used; for example, triethylenetetraamine or diethylenetriamine.

Useful polyamines also include polyoxyalkylenepolyamines. Suitable polyoxyalkylenepolyamines may be represented by the formulae

H₂NR¹¹(R¹²O)_{w}(R¹³O)_{y}(R¹²O)_{z}R¹¹NH₂

(i.e., polyoxyalkylenediamines); or

[H₂NR¹¹(R¹²O)_{w}]_{z}R¹⁴

whereon R¹¹, R¹² and R¹³ represent alkylene groups having 1 to 10 carbon atoms, which may be the same or may be different. Preferably, R¹¹ is an alkylene group having 2 to 4 carbon atoms such as ethylene, n-propylene, isopropylene, n-butylene or isobutylene. Preferably, R¹² and R¹³ are alkylene groups having 2 or 3 carbon atoms such as ethylene, n-propylene, or isopropylene. R¹⁴ is a z-valent organic group (e.g., a residue of a polyol used to prepare the polyoxyalkylenepolyamine), preferably having from 1 to 18 carbon atoms. R¹⁴ may be branched or linear, and substituted or unsubstituted (although substituents should preferably not interfere with oxyalkylation reactions). The value of w is ≥ 1, more preferably about 1 to 150, and most preferably about 1 to 20. The value of x and y are both ≥ 0. The value of z is >2, preferably 3 or 4 (so as to provide, respectively, polyoxyalkylenetriamines and polyoxyalkylenetetraamines). It is preferred that the values of w, x, y and z be chosen such that the resulting complex is a liquid at room temperature ("room temperature" refers to, herein, a temperature of about 20 to 25 °C) as this simplifies handling and mixing thereof. Usually, the polyoxyalkylenepolyamine is itself a liquid. For the polyoxyalkylenepolyamine, molecular weights of less than about 5000 grams/mole may be used, although molecular weights of about 1000 grams/mole or less are more preferred, and molecular weights of about 140 to 1000 grams/mole are most preferred. Examples of particularly preferred polyoxyalkylenepolyamines include poly(ethylene oxide)diaamine, poly(propylene oxide)diamine, poly(propylene oxide)triamine, diethylene glycol dipropylamine, triethylene glycol dipropylamine, poly(tetramethylene oxide)diamine, poly(ethylene oxide-co-propylene oxide)diamine, and poly(ethylene oxide-co-propylene oxide)triamine. Examples of suitable commercially available polyoxyalkylenepolyamines include those marketed under the trade designation JEFFAMINE by Huntsman Corporation such as the D-, ED-, and EDR-series diamines (e.g., D-400, D-2000, D-5000, ED-600, ED-900, ED-2001, and EDR-148), and the T-series triamines (e.g., T-403), as well as DCA-221 from Dixie Chemical Company, Pasadena, Texas.

As reported in U.S. Pat. No. 5,616,796 (Pocius et al.), the polyamine may also comprise the condensation reaction product of diprimary-amine-terminated material (i.e., the two terminal groups are primary amino groups) and one or more materials containing at least two groups that are reactive with primary amines.

Suitable hydroxide and/or alkoxide complexing agents (Cx) are reported, for example, in U.S. Pat. No. 6,486,090 B1 (Moren). Preferred hydroxide and/or alkoxide complexing agents may be represented by the formula

(R¹⁵O⁽⁻⁾)ₙM^{(m+)}

wherein: R¹⁵ is independently selected from hydrogen or an organic group (e.g., alkyle or alkylene group); M^{(m+)} represents a countercation with a charge m+ (e.g., sodium, potassium, tetraalkylammonium, or combinations thereof); n is an integer greater than zero; and m is an integer greater than zero.

Preferred amidine complexing agents (Cx) are reported in U.S. Pat. No. 6,410,667 (Moren). Preferred amidine complexing agents may be represented by the formula 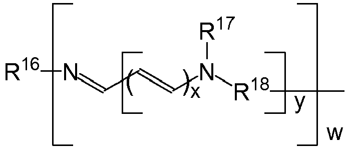 wherein R¹⁶ is hydrogen or an organic group, preferably hydrogen or an alkyle or alkylene group; R¹⁷ and R¹⁸ are independently a monovalent organic group or part of a cyclic structure; and w, x, and y are positive integers. Preferably w is 1, and x is 1, 2, or 3. Particularly preferred amidine complexing agents are selected from the group consisting of N,N,N',N'-tetramethylguanidine; 1,8-diazabicyclo[5,4.0]undec-7-ene; 1,5-diazabicyclo[4.3.0]non-5-ene; 2-methylimidazole; 2-methylimidazoline; and 4-(N,N-dimethylamino)-pyridine.
The organoborane-base complex may be readily prepared using known techniques. Typically, the complexing agent is combined with the organoborane in an inert atmosphere (e.g., a glove box flushed with nitrogen to an environment having less than 100 ppm oxygen) with slow stirring. The organoborane can be added from a pressure equalizing dropping funnel to a flask into which the coupling agent has been previously weighed. An exotherm is often observed and cooling of the mixture is, therefore, recommended. Addition of the organoborane may be moderated to control the exotherm. If the ingredients have a high vapor pressure, it is desirable to keep the reaction temperature below about 70 to 80 °C. Once the materials have been well mixed the complex is permitted to cool to room temperature. No special storage conditions are required although it is preferred that the complex be kept in a capped vessel in a cool, dark location. A crystalline mass of the complex can be heated (e.g., to about 55 °C) with an oil bath and outside of the nitrogen environment to liquefy the complex and facilitate its transfer to the storage vial, which can be flushed with nitrogen.

The organoborane-base complex is generally employed in an effective amount, which is an amount large enough to permit acrylic monomer polymerization to readily occur to obtain an acrylic polymer of high enough molecular weight for the desired end use. If the amount of organoborane produced is too low, then the polymerization may be incomplete or, in the case of adhesives, the resulting composition may have poor adhesion. On the other hand, if the amount is too high, then the polymerization may proceed too rapidly to allow for effective mixing and use of the resulting composition. Useful rates of polymerization will typically depend at least in part on the method of applying the composition to a substrate. Thus, a faster rate of polymerization may be accommodated by using a high speed automated industrial adhesive applicator rather than by applying the composition with a hand applicator or by manually mixing the composition.

Within these parameters, an effective amount of the organoborane-base complex is an amount that preferably provides about 0.003 to 1.5 percent by weight of boron, more preferably about 0.008 to 0.5 percent by weight of boron, and more preferably about 0.01 to 0.3 percent by weight of boron. The percent by weight of boron in a composition is based on the total weight of the composition, less fillers, non-reactive diluents, and other non-reactive materials. Thus, the polymerizable monomers, the vinyl aromatic compound, and organic thickener (e.g., poly(methyl methacrylate) or core-shell polymer), if present, are included, but ingredients lacking abstractable hydrogen atoms or ethylenic unsaturation are not.

The organoborane-base complex is carried by (e.g., dissolved in or diluted by) a diluent (which includes at least one reactive diluent and optionally nonreactive diluent(s)). The diluent should be substantially non-reactive toward the complexing agent.

Suitable reactive diluents include 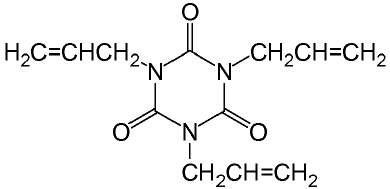 (i.e., triallyl isocyanurate) and 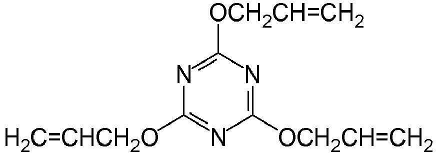 (i.e., triallyl cyanurate).

Suitable reactive diluents also include N-allylamides represented by the formula 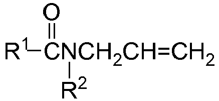 wherein R¹ and R² independently represent alkyl groups having from 1 to 7 carbon atoms (e.g., methyl, ethyl, propyl, isopropyl, butyl, pentyl, hexyl, and heptyl), optionally interrupted up to 3 times by oxygen, and optionally substituted up to 2 times with hydroxyl groups, or taken together R¹ and R² represent - (CH₂)₃- (i.e., N-allylpyrrolidone also known as N-allyl-2-pyrrolidone), -(CH₂)₄- (i.e., N-allylvalerolactam), or -(CH₂)₅- (i.e., N-allylcaprolactam). Preferably, R² is methyl or ethyl, or taken together R¹ and R² represent -(CH₂)₃-.

Suitable reactive diluents also include allyl ethers represented by the formula 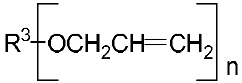 wherein R³ represents an n-valent hydrocarbonaceous group having from 1 to 24 carbon atoms (preferably 2 to 10 carbon atoms, and more preferably 4 to 8 carbon atoms), optionally interrupted up to 8 times by oxygen, and optionally substituted up to 6 times with hydroxyl groups, and n represents 1, 2, 3, 4, 5, or 6. Examples of suitable allyl ether reactive diluents include phenyl allyl ether, trimethylolpropane diallyl ether, pentaerythritol tetraallyl ether, dipentaerythritol hexaallyl ether, trimethylolpropane triallyl ether, ethylene glycol diallyl ether, and diethylene glycol diallyl ether.

Preferably, the reactive diluent, or combination of two or more reactive diluents, is/are liquid at room temperature, and capable of dissolving or dispersing the organoborane-base complex, although this is not a requirement. If the reactive diluent is not liquid and/or will not dissolve the organoborane-base complex, a non-reactive diluent (i.e., solvent) may be beneficial. In general, the amount of any non-reactive diluent should be minimized. Preferably, the reactive diluent in part A is at least 30 to 99 percent by weight, more preferably at least 60 to 95 percent by weight, more preferably from 80 to 95 percent by weight, based on the total combined weight of reactive diluent(s) and organoborane-base complex. Preferably, compositions (part A and/or part B) according to the present disclosure are essentially free of (or even completely free of) any polyfunctional aziridine.

Generally, the reactive diluent does not decomplex the alkylborane-base complex and functions as an extender for the complex. Preferably, the diluent should generally solubilize the monomers included in the polymerizable composition. Suitable reactive diluents should not homopolymerize or react with the organoborane-base complex for a reasonable amount of time. A reasonable amount of time may be thought of as greater than 1 month and preferably up to at least 12 months of stability.

Part B comprises at least one free-radically polymerizable monomer and an acidic decomplexing agent for the organoborane-base complex.

Suitable free-radically polymerizable monomers are typically ethylenically-unsaturated compounds. Preferably, the part B includes at least one (meth)acrylic monomer, most preferably at least one methacrylic monomer. As used herein the terms "(meth)acrylate" and "(meth)acrylic" and the plural forms thereof are meant to include acrylate and/or methacrylate species of the designated compound. For example, the term "ethyl (meth)acrylate" is meant to include ethyl acrylate and/or ethyl methacrylate. Particularly preferred are (meth)acrylic acid derivatives such as those including esters and/or amides. Suitable (meth)acrylic acid derivatives are, for example, the (meth)acrylic esters of monohydric alcohols, particularly alkanols having from 1 to 12 carbon atoms, such as methyl (meth)acrylate, ethyl (meth)acrylate, butyl (meth)acrylate, n-hexyl (meth)acrylate, cyclohexyl (meth)acrylate, isooctyl (meth)acrylate, isobornyl (meth)acrylate, isodecyl (meth)acrylate, ethylhexyl (meth)acrylate; the (meth)acrylic esters of monohydric alcohols further including heteroatoms, such as tetrahydrofurfuryl (meth)acrylate and 2-ethoxyethyl (meth)acrylate; the (meth)acrylic acid esters of polyhydric alcohols, such as ethylene glycol, diethylene glycol, polyethylene glycol, trimethylolpropane, triethylene glycol, tetraethylene glycol, dipropylene glycol, tripropylene glycol, tetrapropylene glycol, pentapropylene glycol and polypropylene glycol; ethoxylated or propoxylated diphenylolpropane and hydroxy-terminated polyurethanes. (Meth)acrylic acid esters of polyhydric alcohols are hereinafter referred to as oligomeric (meth)acrylates.

Also suitable are polymerizable monomers such as vinyl acetate and vinyl halides (e.g., vinyl chloride, vinyl fluoride, and vinyl bromide). These compounds, however, are generally used only in minor amounts in the polymerizable compositions.

Further suitable polymerizable monomers include (meth)acrylamides such as, for example, N,N-dimethylacrylamide, N,N-diethylacrylamide, N-t-butylacrylamide, N-(acryloyl)morpholine, and N-(acryloyl)piperidine. Monomers with one or two free-radically polymerizable groups in the molecule are generally preferred. The additional use of higher unsaturated components is not excluded, but it must be kept in mind that their presence may adversely affect work-life and/or physical performance.

Suitable acidic compounds capable of decomplexing the organoborane-base complex include, for example, carboxylic acids and acid anhydrides.

As used herein, the term "decomplexing agent" refers to a compound capable of liberating the organoborane (i.e., free-radical initiator) from its complexing agent, thereby initiating polymerization of the polymerizable monomer(s) of the bonding composition. Decomplexing agents may also be referred to as "activators" or "liberators" and these terms may be used synonymously herein. The choice of decomplexing agent typically depends on the specific organoborane-base complex used.

If the organoborane is complexed with an amine, a suitable decomplexing agent is an amine-reactive compound. The amine-reactive compound liberates organoborane by reacting with the amine, thereby removing the organoborane from chemical attachment with the amine. A wide variety of materials may be used to provide the amine-reactive compound including combinations of different materials. Desirable amine-reactive compounds are those materials that can readily form reaction products with amines at or below room temperature so as to provide a composition such as an adhesive that can be easily used and cured under ambient conditions. General classes of useful amino-reactive compounds include acids (e.g., carboxylic acids), anhydrides, aldehydes, and beta-keto compounds. Isocyanates, acid chlorides, sulfonyl chlorides, and the like such as, for example, isophorone diisocyanate, toluene diisocyanate and methacryloyl chloride may also be used.

Any acid that can liberate the organoborane by salting the amine group may be employed. Useful acids include Lewis acids (e.g., SnCl₄ or TiCl₄) and Brønsted acids (e.g., carboxylic acids, HCl, H₂SO₄, H₃PO₄, phosphonic acids, phosphinic acids, or silicic acid). Useful carboxylic acids include those having the general formule R¹⁹-CO₂H, wherein R¹⁹ represents hydrogen, an alkyle group having 1 to 8 (preferably 1 to 4) carbon atoms, or an aryl group having 6 to 10 (preferably 6 to 8) carbon atoms. The alkyl groups may comprise a straight chain or they may be branched, and may be saturated or unsaturated. The aryl groups may contain substituents such as alkyl, alkoxy or halogen moieties. Exemplary acids of this type include acrylic acid, methacrylic acid, acetic acid, benzoic acid, and p-methoxybenzoic acid.

Useful carboxylic acids also include those having the general formula R²⁰-CO₂H, wherein R²⁰ may be a straight or branched chain, saturated or unsaturated alkenyl group of from 9 to 36 carbon atoms, preferably from 11 to 24 carbon atoms, and more preferably from 15 to 24 carbon atoms.

Yet other carboxylic acids useful as the amine-reactive compound include dicarboxylic acids and carboxylic acid esters. Such compounds may be represented by the following formula 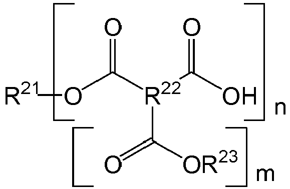 wherein R²¹ is hydrogen, a monovalent organic group (preferably having about 18 atoms or less, more preferably about 8 atoms or less), or a multivalent organic group (preferably having about 30 atoms or less, more preferably about 10 atoms or less). R²² is a multivalent (i.e., (m+2)-valent) organic group (preferably having about 8 atoms or less, more preferably about 4 atoms or less). R²³ is hydrogen or a monovalent organic group (preferably having about 18 atoms or less, more preferably about 8 atoms or less). The value of m is 0, 1 or 2, and the value of n is greater than or equal to one, preferably 1 to 4, more preferably 1 or 2. More preferably m is 0 so as to yield carboxylic acids represented by the formula 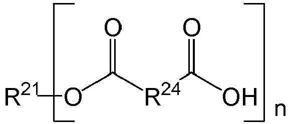 wherein R²¹ and n are as previously defined. R²⁴ is a divalent organic group (preferably having from 1 to 8 carbon atoms, more preferably from 1 to 4 carbon atoms).

The "organic groups" referred to in conjunction with R²¹ - R²⁴ may be aliphatic (including cycloaliphatic), aromatic, or an oxygen-, nitrogen-, or sulfur-containing heterocyclic group. When R²¹ is hydrogen, m is zero, and n is one, the resulting compounds are dicarboxylic acids. Useful dicarboxylic acids include oxalic acid, malonic acid, succinic acid, glutaric acid, adipic acid, maleic acid, fumaric acid, phthalic acid, isophthalic acid, and terephthalic acid. When R²¹ is an aliphatic group, n is one, and m is zero, the resulting compounds are carboxylic acid esters, useful examples of which include: 1,2-ethylene bismaleate; 1,2-propylene bismaleate; 2,2'-diethyleneglycol bismaleate; 2,2'-dipropyleneglycol bismaleate; and trimethylolpropane trismaleate.

Also preferred as amine-reactive compounds are materials having at least one anhydride group, such materials preferably represented by one of the following formulae 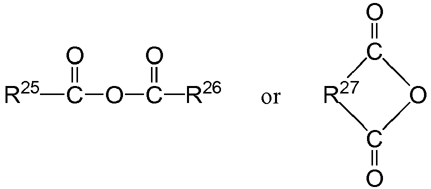 wherein R²⁵ and R²⁶ are organic radicals which independently may be aliphatic (including cycloaliphatic) or aromatic. Preferred aliphatic groups comprise 1 to 17 carbon atoms, more preferably 2 to 9 carbon atoms. Preferred aromatic groups include phenyl, optionally substituted with 1 to 4 carbon atom aliphatic groups. R²⁷ is a divalent organic radical that completes a cyclic structure with the anhydride group to form, for example, a 5- or 6-membered ring. R²⁷ may be substituted with aliphatic, cycloaliphatic or aromatic groups, preferably aliphatic groups comprising 1 to 12, more preferably 1 to 4 carbon atoms. R²⁷ may also contain heteroatoms such as oxygen or nitrogen provided that any heteroatom is not adjacent to the anhydride functionality. R²⁷ may also be part of a cycloaliphatic or aromatic fused ring structure, either of which may be optionally substituted with aliphatic groups. The presence of a free-radically polymerizable group in the anhydride-functional amine reactive compound may permit the same to polymerize with the acrylic monomers.

Suitable aldehydes useful as the amine-reactive compound may include those represented by the formula 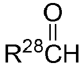 where R²⁸ is a monovalent organic radical such as, for example, an alkyle group having from 1 to 10 carbon atoms (preferably 1 to 4), or an aryl group having from 6 to 10 carbon atoms (preferably 6 to 8)(preferably 1). In this formula, the alkyl groups may be straight or branch-chained, and may contain substituents such as halogen, hydroxy and alkoxy. The aryl groups may contain substituents such as halogen, hydroxy, alkoxy, alkyl and nitro. One preferred R²⁸ group is aryl. Exemplary compounds of this type include: benzaldehyde; o-, m- and p-nitrobenzaldehyde; 2,4-dichlorobenzaldehyde; p-tolylaldehyde; and 3-methoxy-4-hydroxybenzaldehyde. Blocked aldehydes such as acetals and dialdehydes, may also be used.

Other suitable decomplexing agents may include beta-keto compounds (e.g., beta-ketones), for example, as described in U.S. Pat. No. 6,849,569 B2 (Moren). Preferred beta-keto compound decomplexing agents are selected from the group consisting of methyl acetoacetate, ethyl acetoacetate, t-butyl acetoacetate, 2-methacryloyloxyethyl acetoacetate, diethylene glycol bis(acetoacetate), polycaprolactone tris(acetoacetate), polypropylene glycol bis(acetoacetate), poly(styrene-co-allyl acetoacetate), N,N'-dimethylacetoacetamide, N-methylacetoacetamide, acetoacetanilide, ethylene bis(acetoacetamide), polypropylene glycol bis(acetoacetamide), acetoacetamide, and acetoacetonitrile.

The decomplexing agent is typically used in an effective amount (i.e., an amount effective to promote polymerization by liberating the initiator from its complexing agent, but without materially adversely affecting desired properties of the ultimate polymerized composition). As recognizable to one of ordinary skill in the art, too much of the decomplexing agent may cause polymerization to proceed too quickly and, in the case of adhesives, the resulting materials may demonstrate inadequate adhesion to low energy surfaces. However, if too little decomplexing agent is used, the rate of polymerization may be too slow and the resulting polymers may not be of adequate molecular weight for certain applications. A reduced amount of decomplexing agent may be helpful in slowing the rate of polymerization if it is otherwise too fast. Thus, within these parameters, the decomplexing agent is typically provided in an amount such that the ratio of amine-, amidine-, hydroxide-, or alkoxide-reactive groups in the decomplexing agent(s) to amine, amidine, hydroxide or alkoxide groups in the complexing agent(s) is in the range of 0.5:1.0 to 10.0:1.0. For better performance, preferably the ratio of amine-, amidine-, hydroxide-, or alkoxide-reactive groups in the decomplexing agent(s) to amine, amidine, hydroxide, or alkoxide groups in the complexing agent(s) is in the range of 0.5: 1.0 to 4.0:1.0, preferably about 1.0:1.0.

Part A and/or Part B of two-part bonding compositions according to the present disclosure may further comprise optional additives.

One particularly useful additive is a thickener, such as medium (i.e., about 40,000 grams/mole) molecular weight polybutyl methacrylate that may generally be incorporated in an amount of up to about 50 percent by weight, based on the total weight of the polymerizable monomer. Thickeners may be employed to increase the viscosity of the resulting bonding composition to a more easily applied viscous syrup-like consistency.

Another particularly useful additive is an elastomeric material. These materials can improve the fracture toughness of bonding compositions made therewith, which can be beneficial when, for example, bonding stiff, high yield strength materials (e.g., metal substrates that do not mechanically absorb energy as easily as other materials, such as flexible polymeric substrates). Such additives can generally be incorporated in an amount of up to about 50 percent by weight, based on the total weight of the bonding composition.

Core-shell polymers can also be added to modify spreading and flow properties of the bonding composition. These enhanced properties may be manifested by a reduced tendency for the bonding composition to leave an undesirable "string" upon dispensing from a syringe-type applicator, or sag or slump after having been applied to a vertical surface. Accordingly, use of more than about 20 percent by weight, based on total weight of the bonding composition, of a core-shell polymer additive may be desirable for achieving improved sag-slump resistance. Core-shell polymers can also improve the fracture toughness of bonding compositions made therewith, which can be beneficial when, for example, bonding stiff, high yield strength materials (e.g., metal substrates that do not mechanically absorb energy as easily as other materials, such as flexible polymeric substrates).

Small amounts of inhibitors, such as hydroquinone monomethyl ether and tris (N-nitroso-N-phenylhydroxylamine) aluminum salt may be used in polymerizable compositions, for example, to prevent or reduce degradation of the polymerizable monomers during storage. Inhibitors may be added in an amount that does not materially affect the rate of polymerization or the ultimate properties of polymers made therewith. Accordingly, inhibitors are generally useful in amounts of about 100-10000 parts per million based on the total weight of polymerizable monomers in a polymerizable composition.

Other possible additives include non-reactive colorants, fillers (e.g., carbon black, hollow glass/ceramic beads, silica, titanium dioxide, solid glass/ceramic spheres, electrically and/or thermally conductive particulate, antistatic compounds, and chalk), and the like. The various optional additives are employed in any amount, but generally amounts that do not significantly adversely affect the polymerization process or the desired properties of polymers made therewith.

Cure accelerators may also be optionally included (typically in part B if present). Exemplary suitable cure accelerators are metal salts described in U.S. Pat. No. 6,734,268 B2 (Moren).

Two-part bonding compositions according to the present disclosure are especially useful for adhesively bonding low surface energy plastic or polymeric substrates that historically have been very difficult to bond without using complicated surface preparation techniques such as, for example, priming. By low surface energy substrates is meant materials that have a surface energy of less than 45 millijoules per square meter (mJ/m²), more typically less than 40 mJ/m², or less than 35 mJ/m². Included among such materials are polyethylene, polypropylene, acrylonitrile-butadiene-styrene, and fluorinated polymers such as polytetrafluoroethylene which has a surface energy of less than 20 mJ/m². The expression "surface energy" is often used in the art synonymously with "critical wetting tension". Other polymers of somewhat higher surface energy that may be usefully bonded with the compositions according to the present disclosure include polycarbonate, polymethyl methacrylate, and polyvinyl chloride.

The two-part bonding compositions according to the present disclosure are provided as a part A and part B, with these parts being mixed prior to application of the bonding composition to a substrate. In this way, activation of the organoborane can be delayed until parts A and B are combined and then applied to a substrate (or substrates) to from a bond.

For two-part bonding compositions such as those described in the present disclosure to be most easily used in commercial and industrial environments, the ratio at which the two parts are combined should be a convenient whole number. This facilitates application of the adhesive with conventional, commercially available dispensers. Such dispensers are shown in U.S. Pat. Nos. 4,538,920 (Drake) and 5,082,147 (Jacobs) and are available from ConProTec, Inc. (Salem, New Hampshire) under the trade designation MIXPAC, and are sometimes described as dual syringe-type applicators.

Typically, these dispensers use a pair of tubular receptacles arranged side-by-side with each tube being intended to receive one of the two parts of the adhesive. Two plungers, one for each tube, are simultaneously advanced (e.g., manually or by a hand-actuated ratcheting mechanism) to evacuate the contents of the tubes into a common, hollow, elongated mixing chamber that may also contain a static mixer to facilitate blending of the two parts. The blended bonding composition is extruded from the mixing chamber onto a substrate. Once the tubes have been emptied, they can be replaced with fresh tubes and the application process continued.

The ratio at which the two parts of the bonding composition are combined is controlled by the diameter of the tubes. Each plunger is sized to be received within a tube of fixed diameter, and the plungers are advanced into the tubes at the same speed. A single dispenser is often intended for use with a variety of different two-part bonding compositions and the plungers are sized to deliver the two parts of the bonding composition at a convenient mix ratio. Some common mix ratios are 1:1, 1:2, 1:4 and 1:10.

If the two parts of the bonding composition are combined in an odd mix ratio (e.g., 3.5:100), then the ultimate user would probably manually weigh the two parts of the adhesive. Thus, for best commercial and industrial utility and for ease of use with currently available dispensing equipment, the two parts of the bonding composition should be capable of being combined in a common whole number mix ratio such as, for example, 1:1, 1:2, 1:4 and 1:10.

Once the two parts have been combined, the bonding composition should preferably be used within a period of time less than or equal to the work-life of the bonding composition. The bonding composition is applied to one or both substrates and then the substrates are joined together with pressure to force excess composition out of the bond line. This also has the advantage of displacing bonding composition that has been exposed to air and that may have advanced too far in cure. In general, the bonds should be made shortly after the composition has been applied to the substrate, preferably within a period of time less than or equal to the work-life of the bonding composition. The typical bond line thickness is about 0.1 to 0.3 mm but may exceed 1.0 mm when gap filling is needed. The bonding process can easily be carried out at room temperature and to improve the degree of polymerization it is desirable to keep the temperature below about 40 °C, preferably below 30 °C and most preferably below 25 °C Full strength will be reached in about 24 hours under ambient conditions. Post-curing at an elevated temperature may also be used if desired.

### SELECT EMBODIMENTS OF THE PRESENT DISCLOSURE

In a first embodiment, the present disclosure provides a two-part bonding composition comprising:
a part A composition comprising an organoborane-base complex and at least one reactive diluent, wherein the at least one reactive diluent comprises at least one of:
   i) triallyl isocyanurate;
   ii) triallyl cyanurate;
   iii) at least one N-allylamide represented by the formula 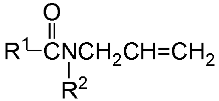 wherein
      R¹ and R² independently represent alkyl groups having from 1 to 7 carbon atoms, optionally interrupted up to 3 times by oxygen, and optionally substituted up to 2 times with hydroxyl groups, or taken together R¹ and R² represent -(CH₂)₃-, -(CH₂)₄-, or -(CH₂)₅-; or
   iv) at least one allyl ether represented by the formula 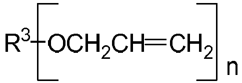 wherein
      R³ represents an n-valent hydrocarbonaceous group having from 1 to 24 carbon atoms, optionally interrupted up to 8 times by oxygen, and optionally substituted up to 6 times with hydroxyl groups, and
      n represents 1, 2, 3, 4, 5, or 6; and
a part B composition comprising at least one free-radically polymerizable monomer and at least one compound capable of decomplexing the organoborane-base complex.

In a second embodiment, the present disclosure provides a two-part bonding composition according to the first embodiment, wherein the at least one reactive diluent comprises triallyl isocyanurate.

In a third embodiment, the present disclosure provides a two-part bonding composition according to the first or second embodiment, wherein the at least one reactive diluent comprises triallyl cyanurate.

In a fourth embodiment, the present disclosure provides a two-part bonding composition according to any one of the first to third embodiments, wherein the at least one reactive diluent comprises at least one of N-allylpyrrolidone, N-allylvalerolactam, or N-allylcaprolactam.

In a fifth embodiment, the present disclosure provides a two-part bonding composition according to any one of the first to fourth embodiments, wherein the at least one reactive diluent comprises the allyl ether.

In a sixth embodiment, the present disclosure provides a two-part bonding composition according to the fifth embodiment, wherein the allyl ether comprises at least one of phenyl allyl ether, trimethylolpropane diallyl ether, or pentaerythritol tetraallyl ether.

In a seventh embodiment, the present disclosure provides a two-part bonding composition according to any one of the first to sixth embodiments, wherein the at least one compound capable of decomplexing the organoborane-base complex comprises at least one of a carboxylic acid or an acid anhydride.

In an eighth embodiment, the present disclosure provides a two-part bonding composition according to any one of the first to seventh embodiments, wherein the organoborane-base complex is represented by the formula

[R⁴R⁵R⁶B]v·Cx

wherein
R represents an alkyl group having from 1 to 10 carbon atoms,
R⁵ and R⁶ independently represent alkyl groups having 1 to 10 carbon atoms or aryl groups,
Cx represents an acyclic amine complexing agent, and
v is a number, wherein 0 < v ≤ 1.

In a ninth embodiment, the present disclosure provides a two-part bonding composition according to the eighth embodiment, wherein Cx is a polyamine comprising at least one primary or secondary amino groups.

In a tenth embodiment, the present disclosure provides a method of making a bonding composition, the method comprising combining:
a part A composition comprising an organoborane-base complex and at least one reactive diluent, wherein the at least one reactive diluent comprises at least one of:
   i) triallyl isocyanurate;
   ii) triallyl cyanurate;
   iii) at least one N-allylamide represented by the formula 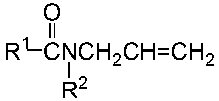 wherein
      R¹ and R² independently represent alkyl groups having from 1 to 7 carbon atoms, optionally interrupted up to 3 times by oxygen, and optionally substituted up to 2 times with hydroxyl groups, or taken together R¹ and R² represent -(CH₂)₃-, -(CH₂)₄-, or -(CH₂)₅-; or
   iv) at least one allyl ether represented by the formula 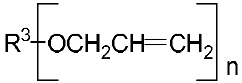 wherein
      R³ represents an n-valent hydrocarbonaceous group having from 1 to 24 carbon atoms, optionally interrupted up to 8 times by oxygen, and optionally substituted up to 6 times with hydroxyl groups, and
      n represents 1, 2, 3, 4, 5, or 6; and
a part B composition comprising at least one free-radically polymerizable monomer and at least one compound capable of decomplexing the organoborane-base complex.

In an eleventh embodiment, the present disclosure provides a method according to the tenth embodiment, wherein the at least one reactive diluent comprises triallyl isocyanurate.

In a twelfth embodiment, the present disclosure provides a method according to the tenth embodiment, wherein the at least one reactive diluent comprises triallyl cyanurate.

In a thirteenth embodiment, the present disclosure provides a method according to any one of the tenth to twelfth embodiments, wherein the at least one reactive diluent comprises at least one of N-allylpyrrolidone, N-allylvalerolactam, or N-allylcaprolactam.

In a fourteenth embodiment, the present disclosure provides a method according to any one of the tenth to thirteenth embodiments, wherein the at least one reactive diluent comprises the allyl ether.

In a fifteenth embodiment, the present disclosure provides a method according to the fourteenth embodiment, wherein the allyl ether comprises at least one of phenyl allyl ether, trimethylolpropane diallyl ether, or pentaerythritol tetraallyl ether.

In a sixteenth embodiment, the present disclosure provides a method according to any one of the tenth to fifteenth embodiments, wherein the at least one compound capable of decomplexing the organoborane-base complex comprises at least one of a carboxylic acid or an acid anhydride.

In a seventeenth embodiment, the present disclosure provides a method according to any one of the tenth to sixteenth embodiments, wherein the organoborane-base complex is represented by the formula

[R⁴R⁵R⁶B]ᵥ·Cx

wherein
R⁴ represents an alkyl group having from 1 to 10 carbon atoms,
R⁵ and R⁶ independently represent alkyl groups having 1 to 10 carbon atoms or aryl groups,
Cx represents an acyclic amine complexing agent, and
v is a number, wherein 0 < v ≤ 1.

In an eighteenth embodiment, the present disclosure provides a method according to the seventeenth embodiment, wherein Cx is a polyamine comprising at least one primary or secondary amino groups.

In a nineteenth embodiment, the present disclosure provides a part A composition for use in a two-part bonding composition, wherein the part A composition comprises an organoborane-base complex and at least one reactive diluent, wherein the at least one reactive diluent is selected from the group consisting of:
i) triallyl isocyanurate;
ii) triallyl cyanurate;
iii) at least one N-allylamide represented by the formula 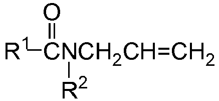 wherein
   R¹ and R² independently represent alkyl groups having from 1 to 7 carbon atoms, optionally interrupted up to 3 times by oxygen, and optionally substituted up to 2 times with hydroxyl groups, or taken together R¹ and R² represent -(CH₂)₃-, -(CH₂)₄-, or -(CH₂)₅-; or
iv) at least one allyl ether represented by the formula 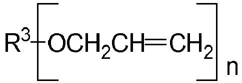 wherein
   R³ represents an n-valent hydrocarbonaceous group having from 1 to 24 carbon atoms, optionally interrupted up to 8 times by oxygen, and optionally substituted up to 6 times with hydroxyl groups, and
   n represents 1, 2, 3, 4, 5, or 6; and
v) combinations thereof.

In a twentieth embodiment, the present disclosure provides a part A composition according to the nineteenth embodiment, wherein the at least one reactive diluent comprises triallyl isocyanurate.

In a twenty-first embodiment, the present disclosure provides a part A composition according to the nineteenth embodiment, wherein the at least one reactive diluent comprises triallyl cyanurate.

In a twenty-second embodiment, the present disclosure provides a part A composition according to any one of the nineteenth to twenty-first embodiments, wherein the at least one reactive diluent comprises at least one ofN-allylpyrrolidone, N-allylvalerolactam, or N-allylcaprolactam.

In a twenty-third embodiment, the present disclosure provides a part A composition according to any one of the nineteenth to twenty-second embodiments, wherein the at least one reactive diluent comprises the allyl ether.

In a twenty-fourth embodiment, the present disclosure provides a part A composition according to the twenty-first embodiment, wherein the allyl ether comprises at least one of phenyl allyl ether, trimethylolpropane diallyl ether, or pentaerythritol tetraallyl ether.

In a twenty-fifth embodiment, the present disclosure provides a part A composition according to any one of the nineteenth to twenty-fourth embodiments, wherein the organoborane-base complex is represented by the formula

[R⁴R⁵R⁶]ᵥ·Cx

wherein
R represents an alkyl group having from 1 to 10 carbon atoms,
R⁵ and R⁶ independently represent alkyl groups having 1 to 10 carbon atoms or aryl groups,
Cx represents an acyclic amine complexing agent, and
v is a number, wherein 0 < v ≤ 1.

In a twenty-sixth embodiment, the present disclosure provides a part A composition according to the twenty-fifth embodiment, wherein Cx is a polyamine comprising at least one primary or secondary amino groups.

In a twenty-seventh embodiment, the present disclosure provides a part A composition according to any one of the nineteenth to twenty-sixth embodiments, wherein the part A composition is essentially free of polyfunctional aziridine.

Objects and advantages of this disclosure are further illustrated by the following non-limiting examples, but the particular materials and amounts thereof recited in these examples, as well as other conditions and details, should not be construed to unduly limit this disclosure.

### EXAMPLES

Unless otherwise noted, all parts, percentages, ratios, in the Examples and the rest of the specification are by weight.

The following materials are used in the Examples.

**TABLE 1**

| ABBREVIATION | DESCRIPTION |
|---|---|
| TEB-DAP | triethylboron-1,3-diaminopropane complex, from BASF SE, Ludwigshafen, Germany |
| APE | allyl pentaerythritol, from Perstorp Specialty Chemicals AB, Skane, Sweden |
| THFMA | tetrahydrofurfuryl methacrylate, obtained as SR 203 from Sartomer Company, West Chester, Pennsylvania |
| triallyl isocyanurate | triallyl isocyanurate obtained as SR533 from Sartomer Co. |
| DP8005 B-Side | SCOTCH-WELD Structural Plastic Adhesive DP8005, from 3M Company |
| TnBB-MOPA | Tri-n-butylborane methoxypropylamine, from BASF Inorganics Division |
| TEB-DETA | Triethylboron 2,2'-diaminodiethylamine complex, from BASF SE, Ludwigshafen, Germany |
| Veova 10 | Vinyl neodecanoate, from Momentive Specialty Chemicals Inc., Columbus, Ohio |
| triallyl cyanurate | 2,4,6-triallyloxy-1,3,5-triazine obtained from Aldrich Chemical Co., Milwaukee, Wisconsin |
| triallyl trimellitate | Triallyl 1,2,4-benzenetricarboxylate from Lancaster Synthesis Inc., Haverhill, Massachusetts |
| TMPDE 90 | [2,2-bis(allyloxymethyl)-butan-1-ol from Perstorp Specialty Chemicals |
| allyl butyrate | Allyl butyrate from Aldrich Chemical Co. |
| N-allylaniline | N-allylaniline from Aldrich Chemical Co. |
| allyl phenyl ether | Allyl phenyl ether obtained from Aldrich Chemical Co. |
| N-allylimidazole | N-allylimidazole from Aldrich Chemical Co. |
| Aziridine | CX-100 crosslinker polyfunctional aziridine, trimethylolpropane tris(2-methyl-1-aziridinepropionate) from DSM Neoresins, Zwolle, The Netherlands |
| diallyl isophthalate | diallyl isophthalate from Aldrich Chemical Co. |
| diallyl phthalate | diallyl phthalate from Aldrich Chemical Co. |
| N-allyl-2-pyrrolidinone | N-allyl-2-pyrrolidinone from Astatech, Inc., Bristol, Pennsylvania |
| divinylbenzene | divinylbenzene, obtained from Alfa Aesar GmbH & Co. KG, Karlsruhe, Germany |
| 2-EHMA | 2-ethylhexyl methacrylate, from INEOS Americas (BP Chemicals Inc.), Naperville, Illinois |
| BLENDEX 262 | Acrylonitrile-Butadiene-Styrene Copolymer, from GE Specialty Chemicals, Dublin, Ohio |
| E-SPHERES | E-sphere SL300, Ceramic Microspheres, from Envirospheres PTY Ltd., Lindfield NSW, Australia |
| NK ester | NK Ester SA, beta-methacryloyl oxyethyl hydrogen succinate, from Shin-Nakamura Chemical Co. Ltd., Wakayama , Japan |
| DBI | Dibutyl itaconate, from Aldrich Chemical Co. |
| CuN | Cupric naphthenate in mineral spirits, 6% Copper, from Pfaltz & Bauer, Inc., Waterbury, Connecticut |

### COMPARATIVE EXAMPLE A

A polymerizable composition was prepared by dissolving, 0.10 g of succinic anhydride in 10 ml of triallyl isocyanurate. Heat was applied until the succinic anhydride went into solution. The solution was allowed to cool to room temperature and 0.10 ml of TEB-DAP was added. Over the time frame of 1-2 months the composition gelled.

### COMPARATIVE EXAMPLE B

A polymerizable composition was prepared by dissolving 0.10 g of succinic anhydride to 10 g of APE. Heat was applied until the succinic anhydride went into solution. This was allowed to cool and 1.0 g of TEB-DAP was added. Upon the addition of the TEB-DAP a gel formed and settled to the bottom of the vial.

### COMPARATIVE EXAMPLE C

A polymerizable composition was prepared by dissolving 0.10 g of succinic anhydride in 10 ml of THFMA. Upon the addition of 0.10 ml of TEB-DAP an exotherm occurred and sample cured in 3 hours.

### COMPARATIVE EXAMPLE D

A polymerizable composition was prepared by dissolving 0.10 g of succinic anhydride in 10 ml of THFMA in a vial. To a second vial was added 14 g of triallyl isocyanurate, and 1.0 g of TEB-DAP. An aliquot of the second vial, 1.0 ml was added to the first vial. An exotherm occurred and the solution cured in 3 hours.

### EXAMPLES 1 to 10 and COMPARATIVE EXAMPLES E to M

To a 2-dram (7-ml) vial was added 2 g of reactive diluent and 1 g of organoborane-base complex/reactive diluent composition (Part A) as reported in Table 2. The vial was agitated. To a second 2-dram (7-ml) vial was added 5.0 ml of 3M DP8005 (Part B containing decomplexing agent). An aliquot, 0.5 ml of Part A was added to Part B. This was mixed with a wooden applicator. The degree of gel was monitored after 1, 4, and 24 hours. Ratings were applied to the degree of cure or gel: Rating scale was 1 = No cure to 10 = complete cure. Results are reported in Table 2 (below).

**TABLE 2**

| EXAMPLE | ORGANOBORANE-BASE COMPLEX | REACTIVE DILUENT | CURE OVER TIME, hours | | |
|---|---|---|---|---|---|
| | | | 1 | 4 | 24 |
| 1 | TEB-DAP | triallyl isocyanurate | 8 | 9 | 10 |
| Comparative Example E | TEB-DAP | Aziridine | 5 | 7 | 10 |
| 2 | TEB-DAP | APE | 7 | 8 | 10 |
| 3 | TEB-DAP | N-allyl-2-pyrrolidinone | 5 | 7 | 10 |
| Comparative Example F | TEB-DAP | N-allylimidazole | 1 | 1 | 1 |
| Comparative Example G | TEB-DAP | N-allylaniline | 2 | 3 | 5 |
| 4 | TEB-DAP | allyl phenyl ether | 7 | 8 | 8 |
| Comparative Example H | TEB-DAP | triallyl trimellitate | 7 | 8 | 10 |
| Comparative Example I | TEB-DAP | Veova 10 | 7 | 8 | 10 |
| 5 | TEB-DAP | TMPDE 90 | 0 | 9 | 10 |
| 6 | TEB-DAP | triallyl cyanurate | 6 | 7 | 10 |
| Comparative Example J | TEB-DAP | allyl butyrate | 8 | 8 | 10 |
| Comparative Example K | TEB-DAP | diallyl isophthalate | 7 | 8 | 10 |
| Comparative Example L | TEB-DAP | diallyl phthalate | 6 | 8 | 10 |
| 7 | TnBB-MOPA | triallyl isocyanurate | 7 | 8 | 9 |
| 8 | TnBB-MOPA | N-allyl-2-pyrrolidinone | 7 | 8 | 9 |
| 9 | TEB-DETA | triallyl isocyanurate | 7 | 9 | 10 |
| 10 | TEB-DETA | N-allyl-2-pyrrolidinone | 7 | 9 | 10 |
| Comparative Example M | TEB-DAP | divinylbenzene | 4 | 8 | 10 |

Reactive diluent/organoborane-base complex mixtures, prepared as above, were placed in Nuclear Magnetic Resonance (NMR) tubes at a 2:1 ratio, and placed in a 120 °F (49 °C) oven. ¹H and ¹¹B NMR spectra were obtained at 0, 3, 7, and 14 days. Observations were made regarding the addition of peaks or the broadening of peaks in the NMR spectra, indicative of instability and/or reactivity of the alkylborane-base complex with the diluent. Results are reported in Tables 3 and 4 (below), wherein Y = yes; N = no; and NT = not tested.

**TABLE 3**

| EXAMPLE | ORGANOBORANE-BASE COMPLEX | REACTIVE DILUENT | NMR Stability | | |
|---|---|---|---|---|---|
| | | | ¹H | ¹¹B | Comments |
| 1 | TEB-DAP | triallyl isocyanurate | Y | Y | clear-yellow; no additional peaks |
| Comparative Example E | TEB-DAP | Aziridine | N | Y | clear; ¹H, Increasing broadening with time indicative of increase in viscosity |
| 2 | TEB-DAP | APE | Y | Y | clear; no additional peaks |
| 3 | TEB-DAP | N-allyl-2-pyrrolidinone | Y | Y | clear; no additional peaks |
| Comparative Example F | TEB-DAP | 1-allyl-imidazole | N | Y | yellow; multiple borane peaks may be the result of exchange and formation of an adduct with the diluent or phase separation |
| Comparative Example G | TEB-DAP | N-allylaniline | Y | Y | red; no additional peaks |
| 4 | TEB-DAP | allyl phenyl ether | Y | Y | red; no additional peaks |
| Comparative Example H | TEB-DAP | triallyl trimellitate | N | Y | yellow; ¹H, peaks changing at 3.5 - 4.0 ppm |
| Comparative Example 1 | TEB-DAP | Veova 10 | N | Y | clear; boron peak broadens, growing peaks at 3.0 - 4.0 ppm |
| 5 | TEB-DAP | TMPDE 90 | Y | Y | clear; no additional peaks |
| 6 | TEB-DAP | triallyl cyanurate | NT | NT | solid |
| Comparative Example J | TEB-DAP | allyl butyrate | N | Y | clear; ¹H, peaks growing with time, 2.5 to 4.5 ppm; ¹¹B, peak broadening |
| Comparative Example K | TEB-DAP | diallyl isophthalate | N | Y | clear, precipitate formed; ¹H, peaks growing in with time, 4.0 to 4.5 ppm, 5.7 ppm |
| Comparative Example L | TEB-DAP | diallyl phthalate | N | Y | clear, precipitate formed; ¹H, peaks growing, 8.6, 9.6 and 11.7 ppm |
| 7 | TnBB-MOPA | triallyl isocyanurate | Y | Y | clear; no additional peaks |
| 8 | TnBB-MOPA | N-allyl-2-pyrrolidinone | Y | Y | red-yellow; no additional peaks |
| 9 | TEB-DETA | triallyl isocyanurate | Y | Y | clear; no additional peaks |
| 10 | TEB-DETA | N-allyl-2-pyrrolidinone | Y | Y | yellow; no additional peaks |
| Comparative Example M | TEB-DAP | divinylbenzene | N | N | solid formed; ¹H, peaks growing, boron peak growing |

**TABLE 4**

| EXAMPLE | ORGANOBORANE-BASE COMPLEX | REACTIVE DILUENT | CURED | STABLE | BOTH | CHEMICAL CLASS |
|---|---|---|---|---|---|---|
| 1 | TEB-DAP | triallyl isocyanurate | Y | Y | Y | N-allyl amide |
| Comparative Example E | TEB-DAP | Aziridine | Y | N | N | polyaziridine |
| 2 | TEB-DAP | APE | Y | Y | Y | allyl ether |
| 3 | TEB-DAP | N-allyl-2-pyrrolidinone | Y | Y | Y | N-allyl amide |
| Comparative Example F | TEB-DAP | 1-allyl-imidazole | N | N | N | N-allylamine |
| Comparative Example G | TEB-DAP | N-allylaniline | N | Y | N | N-allylamine |
| 4 | TEB-DAP | allyl phenyl ether | Y | Y | Y | allyl ether |
| Comparative Example H | TEB-DAP | triallyl trimellitate | Y | N | N | allyl ester |
| Comparative Example I | TEB-DAP | VEOVA 10 | Y | N | N | allyl ester |
| 5 | TEB-DAP | TMPDE 90 | Y | Y | Y | allyl ether |
| 6 | TEB-DAP | triallyl cyanurate | Y | NT | Y | triallyl cyanurate |
| Comparative Example J | TEB-DAP | allyl butyrate | Y | N | N | allyl ester |
| Comparative Example K | TEB-DAP | diallyl isophthalate | Y | N | N | allyl ester |
| Comparative Example L | TEB-DAP | diallyl phthalate | Y | N | N | allyl ester |
| 7 | TnBB-MOPA | triallyl isocyanurate | Y | Y | Y | triallyl isocyanurate |
| 8 | TnBB-MOPA | N-allyl-2-pyrrolidinone | Y | Y | Y | allyl amide |
| 9 | TEB-DETA | triallyl isocyanurate | Y | Y | Y | allyl amide |
| 10 | TEB-DETA | N-allyl-2-pyrrolidinone | Y | Y | Y | allyl amide |
| Comparative Example M | TEB-DAP | divinylbenzene | Y | N | N | alkene |

In Table 4, the column headings "Cured" and "Stable" which summarize the degree of cure of the diluent/alkylborane in the presence of a decomplexing agent (Table 2) and the stability of the diluent in the presence of just the alkylborane alone by ¹H and ¹¹B NMR (Table 3 and Table 4) are reported, a "Yes" indicates that the sample cured within 24 hours and was stable over time (14 days at 49°C (120°F)), and a "No" indicates that one of the two conditions was not satisfied.

Unexpectedly, the organoborane-base complexes TEB-DAP and TEB-DETA containing a diluent with identical moieties of allyl amides, or allyl ethers demonstrated stability with the complexes and functioned as an extender for the complex, even though in the presence of a part B containing a decomplexing agent curing was observed.

### EXAMPLE 11

A two-part composition was prepared as follows:
Part A was prepared by combining 11.1 g of APE, 77.5 grams of triallyl isocyanurate, 6.33 grams of TEB-DAP and 5.1 grams of TS-720. This was mixed by hand followed by mixing on a high shear mixer at 1100 rpm for several minutes.
Part B was prepared by combining 48 g of THFMA, 16 g of 2-EHMA, 0.5 g of succinic anhydride, 21.3 g of BLENDEX 262, 2 g of E-SPHERES, 7 g of NK ester, 4.2 g of DBI, and 1.0 g of CuN. This was mixed by hand followed by mixing using a high shear mixer at 2500 rpms for several minutes.

Parts A and B were packaged in a Sulzer MIXPAC 10:1 cartridge system from Sulzer AG, Winterthur, Switzerland. The larger cylinder of the cartridge held Part B, and the smaller cylinder held Part A. Air bubbles were removed by centrifugation. The two parts were combined by simultaneous extrusion through a 3M S/W EPX Mix Nozzle 9164 using a 3M EPX PLUS II applicator, both from 3M Company.

### OVERLAP SHEAR BOND STRENGTH TESTING

Overlap shear strength of adhesive bonds was measured essentially according to ASTM D1002-10 "Standard Test Method for Apparent Shear Strength of Single-Lap-Joint Adhesively Bonded Metal Specimens by Tension Loading (Metal-to-Metal)", except that they were generated using panels of nominal dimensions 1 inch x 4 inches x 0.125 inch thick (2.5 cm x 10.2 cm x 0.3 cm thick). The bonding composition was applied directly onto one untreated panel and a second untreated test panel was immediately placed against the bonding composition so that the overlapped area was 0.5 inch x 1 inch (1.3 cm x 2.5 cm). The bond was fixtured with binder clips and allowed to cure at room temperature (22 °C) for at least 48 hours, unless otherwise stated, at which time the clips were removed. The small amount of bonding composition that squeezed out of the bondline was allowed to remain.

Overlap shear testing was done on different types of panels: high density polyethylene (HDPE), and polypropylene (PP), both available from Plastic International, Eden Prairie, Minnesota. Three bonds were made with each type of panel and with each bonding composition. Each panel was cleaned with isopropyl alcohol and allowed to dry.

In addition, overlap shear strength was measured on AlCAD, Aluminum clad SHT 2024 T3, 0.063 in x 1 in x 4 in (0.16 cm x 2.5 cm x 4 cm x 10 cm) panels and Stainless Tags, Stainless SHT CR 304 2B P1, 20 GA x 1 in x 4 in (0.005 mm x 4 cm x 10 cm), both available from Ryerson Metals, Minneapolis, Minnesota. The surfaces of these bonds were abraded with a 3M SCOTCH-BRITE SCOUR PAD from 3M Company, followed by cleaning with isopropyl alcohol. The substrates then were allowed to dry.

After curing a minimum of 48 hours, the bonds were tested to failure or to substrate yield using a tensile testing machine. The cross-head speed was 0.5 inches/minute (1.27 cm/minute) for stainless steel and aluminum. The cross-head speed was 2.0 inches/min for HDPE and PP. The tests were carried out at room temperature. Maximum overlap shear values were recorded in pounds per square inch (psi). Failure modes of the substrate were noted as follows: S = substrate yield; C = Cohesive failure; M = both substrate and cohesive failure; A = adhesive failure.

Test specimens were prepared and tested according to the Overlap Shear Bond Strength, Work-life method and Rate of Strength Build Test Methods. Results are reported in Table 5 (below).

**TABLE 5**

| SUBSTRATE | OVERLAP SHEAR BOND STRENGTH, psi (MPa) | FAILURE MODE | AVERAGE OVERLAP SHEAR BOND STRENGTH, psi (MPa) |
|---|---|---|---|
| HDPE | 1130 (7.8) | C | 1133 (7.8) |
| | 1134 (7.8) | C | |
| | 1136 (7.8) | S | |
| PP | 1162 (8.0) | S | 1159 (8.0) |
| | 1096 (7.6) | S | |
| | 1218 (8.4) | S | |
| SS | 1818 (12.5) | M | 1845 (12.7) |
| | 1810 (12.5) | M | |
| | 1906 (13.1) | M | |
| A1 | 1792 (12.4) | M | 1884 (13.0) |
| | 2044 (14.1) | M | |
| | 1816 (12.5) | M | |
| Green FP | 2112 (14.6) | C | 2371 (16.3) |
| | 2570 (17.7) | C | |
| | 2430 (16.8) | C | |

### WORK-LIFE TESTING

The method outlined in the Overlap Shear Bond Strength Testing procedure (above) was followed except that the second untreated test panel was not immediately placed against the bonding composition but rather the first panel bearing the bonding composition was allowed to stand in air for the time specified in the individual Examples. At the end of the elapsed time (i.e., open time), the second untreated panel was placed against the bonding composition to provide the overlapped area, clips were attached, and the bond cured for at least 48 hours at room temperature unless otherwise stated. The test panels were HDPE. Failure modes of the substrate were noted as follows: S = substrate yield; C = Cohesive failure; M = both substrate and cohesive failure; A = adhesive failure.

Results are reported in Table 6 (below).

**TABLE 6**

| OVERLAP SHEAR BOND STRENGTH | | | |
|---|---|---|---|
| OPEN TIME, minutes | HDPE, psi (MPa) | FAILURE MODE | AVERAGE HDPE, psi (MPa) |
| 0 | 1130 (7.8) | C | 1133 (7.8) |
| | 1134 (7.8) | C | |
| | 1136 (7.8) | S | |
| 1 | 1132 (7.8) | C | 1132 (7.8) |
| | 1132 (7.8) | C | |
| 3 | 1136 (7.8) | C | 1136 (7.8) |
| | 1136 (7.8) | S | |
| 5 | 1132 (7.8) | C | 1132 (7.8) |
| | 1132 (7.8) | S | |
| 7 | 1122 (7.7) | C | 1074 (7.4) |
| | 1026 (7.1) | C | |
| 10 | 898 (6.2) | M | 951 (6.6) |
| | 1004 (6.9) | M | |
| 15 | 70 (4.8) | A | 690 (4.8) |
| | 680 (4.7) | A | |
| 30 | 284 (2.0) | A | 234 (1.6) |
| | 184 (1.3) | A | |

### RATE OF STRENGTHINCREASE TESTING

The method used in the Overlap Shear Bond Strength Testing above was followed, except that the bonds were cured for less than 48 hours. The bonds were cured for the times specified in the Examples. At the end of the elapsed time (i.e., cure time), the clips were removed and the bonds were tested as above. The test panels were HDPE. Failure modes of the substrate were noted as follows: S = substrate yield; C = Cohesive failure; M = both substrate and cohesive failure; A = adhesive failure.

Results are reported in Table 7 (below).

**TABLE 7**

| OVERLAP SHEAR BOND STRENGTH | | | |
|---|---|---|---|
| CURE TIME, hours | HDPE, psi (MPa) | FAILURE MODE | AVERAGE HDPE, psi (MPa) |
| 0.5 | 8 (0.1) | C | 11 (0.1) |
| | 14 (0.1) | C | |
| 1.0 | 38 (0.3) | C | 37 (0.3) |
| | 36 (0.2) | C | |
| 1.5 | 92 (0.6) | C | 78 (0.5) |
| | 64 (0.4) | C | |
| 2.0 | 268 (1.8) | C | 214 (1.5) |
| | 160 (1.1) | C | |
| 2.5 | 252 (1.7) | C | 225 (1.6) |
| | 198 (1.4) | C | |
| 3.0 | 358 (2.5) | C | 284 (2.0) |
| | 210 (1.4) | C | |
| 4.0 | 460 (3.2) | C | 417 (2.9) |
| | 374 (2.6) | C | |
| 6.0 | 682 (4.7) | C | 666 (4.6) |
| | 650 (435) | C | |
| 24.0 | 1066 (7.3) | C | 1012 (7.0) |
| | 95 (6.6) | C | |

## Claims

1. A two-part bonding composition comprising:
a part A composition comprising an organoborane-base complex and at least one reactive diluent, wherein the at least one reactive diluent comprises at least one of:
i) triallyl isocyanurate;
ii) triallyl cyanurate;
iii) at least one N-allylamide represented by the formula 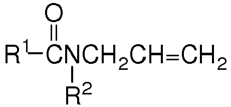 wherein
R ¹ and R² independently represent alkyl groups having from 1 to 7 carbon atoms, optionally interrupted up to 3 times by oxygen, and optionally substituted up to 2 times with hydroxyl groups, or taken together R¹ and R² represent -(CH₂)₃-, -(CH₂)₄-, or -(CH₂)₅-; or
iv) at least one allyl ether represented by the formula 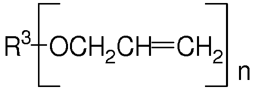 wherein
R³ represents an n-valent hydrocarbonaceous group having from 1 to 24 carbon atoms, optionally interrupted up to 8 times by oxygen, and optionally substituted up to 6 times with hydroxyl groups, and
n represents 1, 2, 3, 4, 5, or 6; and
a part B composition comprising at least one free-radically polymerizable monomer and at least one compound capable of decomplexing the organoborane-base complex.

2. The two-part bonding composition of claim 1, wherein the at least one reactive diluent comprises triallyl isocyanurate.

3. The two-part bonding composition of claim 1, wherein the at least one reactive diluent comprises triallyl cyanurate.

4. The two-part bonding composition of claim 1, wherein the at least one reactive diluent comprises at least one of N-allylpyrrolidone, N-allylvalerolactam, or N-allylcaprolactam.

5. The two-part bonding composition of claim 1, wherein the at least one compound capable of decomplexing the organoborane-base complex comprises at least one of a carboxylic acid or an acid anhydride.

6. The two-part bonding composition of claim 1, wherein the organoborane-base complex is represented by the formula
[R⁴R⁵R⁶B]ᵥ·Cx
wherein
R⁴ represents an alkyl group having from 1 to 10 carbon atoms,
R⁵ and R⁶ independently represent alkyl groups having 1 to 10 carbon atoms or aryl groups,
Cx represents an acyclic amine complexing agent, and
v is a number, wherein 0 < v ≤ 1.

7. A method of making a bonding composition, the method comprising combining:
a part A composition comprising an organoborane-base complex and at least one reactive diluent, wherein the at least one reactive diluent comprises at least one of:
i) triallyl isocyanurate;
ii) triallyl cyanurate;
iii) at least one N-allylamide represented by the formula 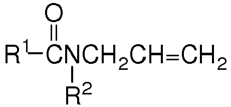 wherein
R¹ and R² independently represent alkyl groups having from 1 to 7 carbon atoms, optionally interrupted up to 3 times by oxygen, and optionally substituted up to 2 times with hydroxyl groups, or taken together R¹ and R² represent -(CH₂)₃-, -(CH₂)₄-, or -(CH₂)₅-; or
iv) at least one allyl ether represented by the formula 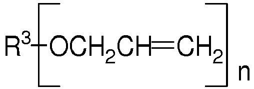 wherein
R³ represents an n-valent hydrocarbonaceous group having from 1 to 24 carbon atoms, optionally interrupted up to 8 times by oxygen, and optionally substituted up to 6 times with hydroxyl groups, and
n represents 1, 2, 3, 4, 5, or 6; and
a part B composition comprising at least one free-radically polymerizable monomer and at least one compound capable of decomplexing the organoborane-base complex.

8. The method of claim 7, wherein the at least one reactive diluent comprises triallyl isocyanurate.

9. The method of claim 7, wherein the at least one reactive diluent comprises at least one of N-allylpyrrolidone, N-allylvalerolactam, or N-allylcaprolactam.

10. The method of claim 7, wherein the organoborane-base complex is represented by the formula
[R⁴R⁵R⁶B]ᵥ·Cx
wherein
R⁴ represents an alkyl group having from 1 to 10 carbon atoms,
R⁵ and R⁶ independently represent alkyl groups having 1 to 10 carbon atoms or aryl groups,
Cx represents an acyclic amine complexing agent, and
v is a number, wherein 0 < v ≤ 1.

11. A part A composition for use in a two-part bonding composition, wherein the part A composition comprises an organoborane-base complex and at least one reactive diluent, wherein the at least one reactive diluent is selected from the group consisting of:
i) triallyl isocyanurate;
ii) triallyl cyanurate;
iii) at least one N-allylamide represented by the formula 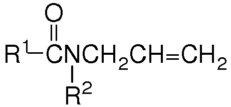 wherein
R¹ and R² independently represent alkyl groups having from 1 to 7 carbon atoms, optionally interrupted up to 3 times by oxygen, and optionally substituted up to 2 times with hydroxyl groups, or taken together R¹ and R² represent -(CH₂)₃-, -(CH₂)₄-, or -(CH₂)₅-; or
iv) at least one allyl ether represented by the formula 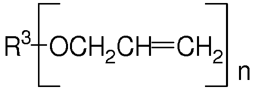 wherein
R³ represents an n-valent hydrocarbonaceous group having from 1 to 24 carbon atoms, optionally interrupted up to 8 times by oxygen, and optionally substituted up to 6 times with hydroxyl groups, and
n represents 1, 2, 3, 4, 5, or 6; and
v) combinations thereof.

12. The part A composition of claim 11, wherein the at least one reactive diluent comprises triallyl isocyanurate.

13. The part A composition of claim 11, wherein the at least one reactive diluent comprises triallyl cyanurate.

14. The part A composition of claim 11, wherein the at least one reactive diluent comprises at least one of N-allylpyrrolidone, N-allylvalerolactam, or N-allylcaprolactam.

15. The part A composition of claim 11, wherein the organoborane-base complex is represented by the formula
[R⁴R⁵R⁶B]ᵥ·Cx
wherein
R⁴ represents an alkyl group having from 1 to 10 carbon atoms,
R⁵ and R⁶ independently represent alkyl groups having 1 to 10 carbon atoms or aryl groups,
Cx represents an acyclic amine complexing agent, and
v is a number, wherein 0 < v ≤ 1.

## Patentansprüche

1. Zweiteilige Klebstoffzusammensetzung, umfassend:
eine Zusammensetzung von Teil A, umfassend einen organoboranbasierten Komplex und mindestens ein reaktionsfähiges Verdünnungsmittel, wobei das mindestens eine reaktionsfähige Verdünnungsmittel mindestens eines von Folgendem umfasst:
i) Triallylisocyanurat;
ii) Triallylcyanurat;
iii) mindestens ein N-Allylamid gemäß der Formel 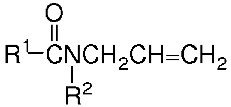 worin
R¹ und R² unabhängig voneinander für Alkylgruppen mit 1 bis 7 Kohlenstoff atomen stehen, die wahlweise bis zu 3 Mal durch Sauerstoff unterbrochen und wahlweise bis zu 2 Mal mit Hydroxylgruppen substituiert sind, oder R¹ und R² zusammengefasst für-(CH₂)₃-, -(CH₂)₄- oder -(CH₂)₅- stehen; oder
iv) mindestens einen Allylether gemäß der Formel 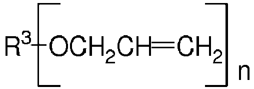 worin
R³ für eine n-wertige kohlenwasserstoffhaltige Gruppe mit 1 bis 24 Kohlenstoff atomen steht, die wahlweise bis zu 8 Mal durch Sauerstoff unterbrochen und wahlweise bis zu 6 Mal mit Hydroxylgruppen substituiert ist, und
n für 1, 2, 3, 4, 5 oder 6 steht; und
eine Zusammensetzung von Teil B, umfassend mindestens ein radikalisch polymerisierbares Monomer und mindestens eine Verbindung, die zum Dekomplexieren des organoboranbasierten Komplexes in der Lage ist.

2. Zweiteilige Klebstoffzusammensetzung nach Anspruch 1, wobei das mindestens eine reaktionsfähige Verdünnungsmittel Triallylisocyanurat umfasst.

3. Zweiteilige Klebstoffzusammensetzung nach Anspruch 1, wobei das mindestens eine reaktionsfähige Verdünnungsmittel Triallylcyanurat umfasst.

4. Zweiteilige Klebstoffzusammensetzung nach Anspruch 1, wobei das mindestens eine reaktionsfähige Verdünnungsmittel mindestens eines von N-Allylpyrrolidon, N-Allylvalerolactam oder N-Allylcaprolactam umfasst.

5. Zweiteilige Klebstoffzusammensetzung nach Anspruch 1, wobei die mindestens eine Verbindung, die zum Dekomplexieren des organoboranbasierten Komplexes in der Lage ist, mindestens eines von einer Carbonsäure oder einem Säureanhydrid umfasst.

6. Zweiteilige Klebstoffzusammensetzung nach Anspruch 1, wobei der organoboranbasierte Komplex durch folgende Formel dargestellt wird
[R⁴R⁵R⁶B]ᵥ·Cx
worin
R⁴ für eine Alkylgruppe mit 1 bis 10 Kohlenstoffatomen steht,
R⁵ und R⁶ unabhängig voneinander für Alkylgruppen mit 1 bis 10 Kohlenstoffatomen oder Arylgruppen stehen,
Cx für ein acyclisches Amin-Komplexierungsmittel steht, und
v eine Zahl ist, wobei 0 < v ≤ 1.

7. Verfahren zum Herstellen einer Klebstoffzusammensetzung, wobei das Verfahren umfasst, Folgendes zu kombinieren:
eine Zusammensetzung von Teil A, umfassend einen organoboranbasierten Komplex und mindestens ein reaktionsfähiges Verdünnungsmittel, wobei das mindestens eine reaktionsfähige Verdünnungsmittel mindestens eines von Folgendem umfasst:
i) Triallylisocyanurat;
ii) Triallylcyanurat;
iii) mindestens ein N-Allylamid gemäß der Formel 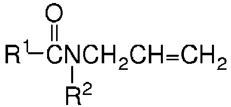 worin
R¹ und R² unabhängig voneinander für Alkylgruppen mit 1 bis 7 Kohlenstoff atomen stehen, die wahlweise bis zu 3 Mal durch Sauerstoff unterbrochen und wahlweise bis zu 2 Mal mit Hydroxylgruppen substituiert sind, oder R¹ und R² zusammengefasst für-(CH₂)₃-, -(CH₂)₄- oder -(CH₂)₅- stehen; oder
iv) mindestens einen Allylether gemäß der Formel 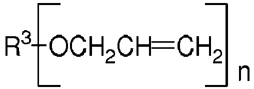 worin
R³ für eine n-wertige kohlenwasserstoffhaltige Gruppe mit 1 bis 24 Kohlenstoff atomen steht, die wahlweise bis zu 8 Mal durch Sauerstoff unterbrochen und wahlweise bis zu 6 Mal mit Hydroxylgruppen substituiert ist, und
n für 1, 2, 3, 4, 5 oder 6 steht; und
eine Zusammensetzung von Teil B, umfassend mindestens ein radikalisch polymerisierbares Monomer und mindestens eine Verbindung, die zum Dekomplexieren des organoboranbasierten Komplexes in der Lage ist.

8. Verfahren gemäß Anspruch 7, wobei das mindestens eine reaktionsfähige Verdünnungsmittel Triallylisocyanurat umfasst.

9. Verfahren nach Anspruch 7, wobei das mindestens eine reaktionsfähige Verdünnungsmittel mindestens eines von N-Allylpyrrolidon, N-Allylvalerolactam oder N-Allylcaprolactam umfasst.

10. Verfahren nach Anspruch 7, wobei der organoboranbasierte Komplex durch folgende Formel dargestellt wird
[R⁴R⁵R⁶B]ᵥ·Cx
worin
R⁴ für eine Alkylgruppe mit 1 bis 10 Kohlenstoffatomen steht,
R⁵ und R⁶ unabhängig voneinander für Alkylgruppen mit 1 bis 10 Kohlenstoffatomen oder Arylgruppen stehen,
Cx für ein acyclisches Amin-Komplexierungsmittel steht, und
v eine Zahl ist, wobei 0 < v ≤ 1.

11. Zusammensetzung von Teil A zum Gebrauch in einer zweiteiligen Klebstoffzusammensetzung, wobei die Zusammensetzung von Teil A einen organoboranbasierten Komplex und mindestens ein reaktionsfähiges Verdünnungsmittel umfasst, wobei das mindestens eine reaktionsfähige Verdünnungsmittel ausgewählt ist aus der Gruppe, bestehend aus:
i) Triallylisocyanurat;
ii) Triallylcyanurat;
iii) mindestens ein N-Allylamid gemäß der Formel 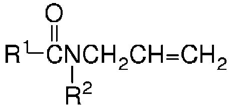 worin
R¹ und R² unabhängig voneinander für Alkylgruppen mit 1 bis 7 Kohlenstoff atomen stehen, die wahlweise bis zu 3 Mal durch Sauerstoff unterbrochen und wahlweise bis zu 2 Mal mit Hydroxylgruppen substituiert sind, oder R¹ und R² zusammengefasst für-(CH₂)₃-, -(CH₂)₄- oder -(CH₂)₅- stehen; oder
iv) mindestens einen Allylether gemäß der Formel 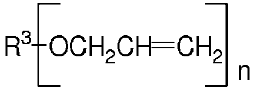 worin
R³ für eine n-wertige kohlenwasserstoffhaltige Gruppe mit 1 bis 24 Kohlenstoff atomen steht, die wahlweise bis zu 8 Mal durch Sauerstoff unterbrochen und wahlweise bis zu 6 Mal mit Hydroxylgruppen substituiert ist, und
n für 1, 2, 3, 4, 5 oder 6 steht; und
v) Kombinationen davon.

12. Zusammensetzung von Teil A nach Anspruch 11, wobei das mindestens eine reaktionsfähige Verdünnungsmittel Triallylisocyanurat umfasst.

13. Zusammensetzung von Teil A nach Anspruch 11, wobei das mindestens eine reaktionsfähige Verdünnungsmittel Triallylcyanurat umfasst.

14. Zusammensetzung von Teil A nach Anspruch 11, wobei das mindestens eine reaktionsfähige Verdünnungsmittel mindestens eines von N-Allylpyrrolidon, N-Allylvalerolactam oder N-Allylcaprolactam umfasst.

15. Zusammensetzung von Teil A nach Anspruch 11, wobei der organoboranbasierte Komplex durch folgende Formel dargestellt wird
[R⁴R⁵R⁶B]ᵥ·Cx
worin
R⁴ für eine Alkylgruppe mit 1 bis 10 Kohlenstoffatomen steht,
R⁵ und R⁶ unabhängig voneinander für Alkylgruppen mit 1 bis 10 Kohlenstoffatomen oder Arylgruppen stehen,
Cx für ein acyclisches Amin-Komplexierungsmittel steht, und
v eine Zahl ist, wobei 0 < v ≤ 1.

## Revendications

1. Composition de liaison à deux parties comprenant :
une composition de partie A comprenant un complexe à base d'organoborane et au moins un diluant réactif, dans laquelle ledit au moins un diluant réactif comprend au moins l'un parmi :
i) un isocyanurate de triallyle ;
ii) un cyanurate de triallyle ;
iii) au moins un N-allylamide représenté par la formule 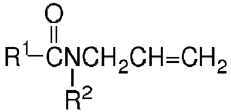 dans laquelle
R¹ et R² représentent indépendamment des groupes alkyle comportant de 1 à 7 atomes de carbone, éventuellement interrompus jusqu'à 3 fois par de l'oxygène, et éventuellement substitués jusqu'à 2 fois avec des groupes hydroxyle, ou pris ensemble R¹ et R² représentent -(CH₂)₃-, -(CH₂)₄- ou -(CH₂)₅- ; ou
iv) au moins un éther allylique représenté par la formule 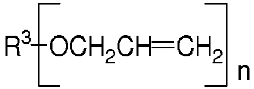 dans laquelle
R³ représente un groupe hydrocarboné de valence n comportant de 1 à 24 atomes de carbone, éventuellement interrompu jusqu'à 8 fois par de l'oxygène, et éventuellement substitué jusqu'à 6 fois avec des groupes hydroxyle, et
n représente 1, 2, 3, 4, 5 ou 6 ; et
une composition de partie B comprenant au moins un monomère polymérisable par radicaux libres et au moins un composé susceptible de décomplexer le complexe à base d'organoborane.

2. Composition de liaison à deux parties selon la revendication 1, dans laquelle ledit au moins un diluant réactif comprend un isocyanurate de triallyle.

3. Composition de liaison à deux parties selon la revendication 1, dans laquelle ledit au moins un diluant réactif comprend un cyanurate de triallyle.

4. Composition de liaison à deux parties selon la revendication 1, dans laquelle ledit au moins un diluant réactif comprend au moins l'un parmi N-allylpyrrolidone, N-allylvalérolactame ou N-allylcaprolactame.

5. Composition de liaison à deux parties selon la revendication 1, dans laquelle ledit au moins un composé susceptible de décomplexer le complexe à base d'organoborane comprend au moins l'un parmi un acide carboxylique ou un anhydride d'acide.

6. Composition de liaison à deux parties selon la revendication 1, dans laquelle le complexe à base d'organoborane est représenté par la formule
[R⁴R⁵R⁶B]ᵥ·Cx
dans laquelle
R⁴ représente un groupe alkyle comportant de 1 à 10 atomes de carbone,
R⁵ et R⁶ représentent indépendamment des groupes alkyle comportant 1 à 10 atomes de carbone ou des groupes aryle,
Cx représente un agent complexant amine acyclique, et
v est un nombre, dans laquelle 0 < v ≤ 1.

7. Procédé de fabrication d'une composition de liaison, le procédé comprenant la combinaison de :
une composition de partie A comprenant un complexe à base d'organoborane et au moins un diluant réactif, dans laquelle ledit au moins un diluant réactif comprend au moins l'un parmi :
i) un isocyanurate de triallyle ;
ii) un cyanurate de triallyle ;
iii) au moins un N-allylamide représenté par la formule 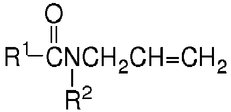 dans lequel
R¹ et R² représentent indépendamment des groupes alkyle comportant de 1 à 7 atomes de carbone, éventuellement interrompus jusqu'à 3 fois par de l'oxygène, et éventuellement substitués jusqu'à 2 fois avec des groupes hydroxyle, ou pris ensemble R¹ et R² représentent -(CH₂)₃-, -(CH₂)₄- ou -(CH₂)₅- ; ou
iv) au moins un éther allylique représenté par la formule 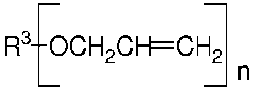 dans lequel
R³ représente un groupe hydrocarboné de valence n comportant de 1 à 24 atomes de carbone, éventuellement interrompu jusqu'à 8 fois par de l'oxygène, et éventuellement substitué jusqu'à 6 fois avec des groupes hydroxyle, et
n représente 1, 2, 3, 4, 5 ou 6 ; et
une composition de partie B comprenant au moins un monomère polymérisable par radicaux libres et au moins un composé susceptible de décomplexer le complexe à base d'organoborane.

8. Procédé selon la revendication 7, dans lequel ledit au moins un diluant réactif comprend un isocyanurate de triallyle.

9. Procédé selon la revendication 7, dans lequel ledit au moins un diluant réactif comprend au moins l'un parmi N-allylpyrrolidone, N-allylvalérolactame ou N-allylcaprolactame.

10. Procédé selon la revendication 7, dans lequel le complexe à base d'organoborane est représenté par la formule
[R⁴R⁵R⁶B]ᵥ·Cx
dans lequel
R⁴ représente un groupe alkyle comportant de 1 à 10 atomes de carbone,
R⁵ et R⁶ représentent indépendamment des groupes alkyle comportant 1 à 10 atomes de carbone ou des groupes aryle,
Cx représente un agent complexant amine acyclique, et
v est un nombre, dans lequel 0 < v ≤ 1.

11. Composition de partie A pour une utilisation dans une composition de liaison à deux parties, où la composition de partie A comprend un complexe à base d'organoborane et au moins un diluant réactif, dans laquelle ledit au moins un diluant réactif est choisi dans le groupe constitué de :
i) un isocyanurate de triallyle ;
ii) un cyanurate de triallyle ;
iii) au moins un N-allylamide représenté par la formule 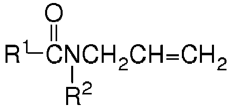 dans laquelle
R¹ et R² représentent indépendamment des groupes alkyle comportant de 1 à 7 atomes de carbone, éventuellement interrompus jusqu'à 3 fois par de l'oxygène, et éventuellement substitués jusqu'à 2 fois avec des groupes hydroxyle, ou pris ensemble R¹ et R² représentent -(CH₂)₃-, -(CH₂)₄- ou -(CH₂)₅- ; ou
iv) au moins un éther allylique représenté par la formule 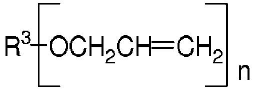 dans laquelle
R³ représente un groupe hydrocarboné de valence n comportant de 1 à 24 atomes de carbone, éventuellement interrompu jusqu'à 8 fois par de l'oxygène, et éventuellement substitué jusqu'à 6 fois avec des groupes hydroxyle, et
n représente 1, 2, 3, 4, 5 ou 6 ; et
v) des combinaisons de ceux-ci.

12. Composition de partie A selon la revendication 11, dans laquelle ledit au moins un diluant réactif comprend un isocyanurate de triallyle.

13. Composition de partie A selon la revendication 11, dans laquelle ledit au moins un diluant réactif comprend un cyanurate de triallyle.

14. Composition de partie A selon la revendication 11, dans laquelle ledit au moins un diluant réactif comprend au moins l'un parmi N-allylpyrrolidone, N-allylvalérolactame ou N-allylcaprolactame.

15. Composition de partie A selon la revendication 11, dans laquelle le complexe à base d'organoborane est représenté par la formule
[R⁴R⁵R⁶B]ᵥ·Cx
dans laquelle
R⁴ représente un groupe alkyle comportant de 1 à 10 atomes de carbone,
R⁵ et R⁶ représentent indépendamment des groupes alkyle comportant 1 à 10 atomes de carbone ou des groupes aryle,
Cx représente un agent complexant amine acyclique, et
v est un nombre, dans laquelle 0 < v ≤ 1.
